(19) Europäisches Patentamt / European Patent Office / Office européen des brevets

(11) **EP 3 571 513 B1**

(12) **FASCICULE DE BREVET EUROPEEN**

(45) Date de publication et mention de la délivrance du brevet:
**08.11.2023  Bulletin 2023/45**

(21) Numéro de dépôt: **18700514.5**

(22) Date de dépôt: **19.01.2018**

(51) Classification Internationale des Brevets (IPC):
**G01Q 10/04** (2010.01)   **G01Q 20/04** (2010.01)
**G01Q 60/38** (2010.01)   **G02B 6/293** (2006.01)

(52) Classification Coopérative des Brevets (CPC):
**G01Q 60/38; G01Q 10/045; G01Q 20/04;
G02B 6/29338**

(86) Numéro de dépôt international:
**PCT/EP2018/051360**

(87) Numéro de publication internationale:
**WO 2018/134377 (26.07.2018 Gazette 2018/30)**

(54) **SONDE POUR MICROSCOPE À FORCE ATOMIQUE ÉQUIPÉ D'UN RÉSONATEUR OPTOMÉCANIQUE ET MICROSCOPE À FORCE ATOMIQUE COMPORTANT UNE TELLE SONDE**

SONDE FÜR EIN RASTERKRAFTMIKROSKOP MIT EINEM OPTOMECHANISCHEN RESONATOR UND RASTERKRAFTMIKROSKOP MIT SOLCH EINER SONDE

PROBE FOR ATOMIC FORCE MICROSCOPE EQUIPPED WITH AN OPTOMECHANICAL RESONATOR AND ATOMIC FORCE MICROSCOPE COMPRISING SUCH A PROBE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.01.2017  FR 1750471**

(43) Date de publication de la demande:
**27.11.2019  Bulletin 2019/48**

(73) Titulaires:
- **Centre National de la Recherche Scientifique
  75016 Paris 16 (FR)**
- **Commissariat à l'Energie Atomique et aux Energies
  Alternatives
  75015 Paris (FR)**
- **Université Paris Cité
  75006 Paris (FR)**
- **Université des Sciences et Technologies de Lille 1
  59655 Villeneuve-d'Ascq Cedex (FR)**
- **Vmicro
  59652 Villeneuve d'Ascq (FR)**

(72) Inventeurs:
- **LEGRAND, Bernard
  31410 Lavernose-Lacasse (FR)**
- **HENTZ, Sébastien
  38170 Seyssinet Pariset (FR)**
- **DURAFFOURG, Laurent
  38500 Voiron (FR)**
- **FAVERO, Ivan
  75012 Paris (FR)**
- **FAUCHER, Marc
  59810 Lesquin (FR)**
- **ALLAIN, Pierre
  75014 Paris (FR)**
- **WALTER, Benjamin
  59000 Lille (FR)**

(74) Mandataire: **Vidon Brevets & Stratégie
16B, rue de Jouanet
BP 90333
35703 Rennes Cedex 7 (FR)**

(56) Documents cités:
**WO-A1-2017/012927    US-A1- 2014 338 074**

- YUXIANG LIU ET AL: "Wide cantilever stiffness range cavity optomechanical sensors for atomic force microscopy", OPTICS EXPRESS, vol. 20, no. 16, 30 juillet 2012 (2012-07-30), page 18268, XP055359860, ISSN: 2161-2072, DOI: 10.1364/OE.20.018268

• **KARTIK SRINIVASAN ET AL: "Optomechanical Transduction of an Integrated Silicon Cantilever Probe Using a Microdisk Resonator", NANO LETTERS, vol. 11, no. 2, 9 février 2011 (2011-02-09), pages 791-797, XP055405248, US ISSN: 1530-6984, DOI: 10.1021/nl104018r cité dans la demande**

**Description**

## 1. DOMAINE DE L'INVENTION

L'invention se rapporte au domaine de la microscopie à force atomique.

L'invention porte sur une sonde pour microscope à force atomique exploitant un résonateur optomécanique.

La microscopie à force atomique (ou AFM pour *« Atomic Force Microscope »* en anglais) est une technique de microscopie à sonde locale balayante permettant de visualiser avec une résolution micrométrique, nanométrique, voire atomique, la morphologie tridimensionnelle de la surface d'un matériau, et d'imager certaines de ses propriétés. Cette technique permet de travailler sur des matériaux de nature et de propriétés mécaniques variées, ainsi que dans des milieux variés (à l'air libre, sous vide, ou en milieu liquide).

## 2. ARRIÈRE-PLAN TECHNOLOGIQUE

Le principe de la microscopie à force atomique est basé sur l'interaction entre la surface du matériau à analyser et une pointe de sonde. La sonde constitue l'élément sensible du microscope : elle comprend un résonateur mécanique pourvu de la pointe de sonde orientée vers la surface du matériau à analyser. Un mode de fonctionnement classique est le mode oscillant dans lequel le résonateur mécanique vibre à une fréquence proche d'une de ses fréquences propres. La pointe ainsi mise en vibration est destinée à interagir avec les forces attractives et/ou répulsives présentes en surface du matériau. La pointe balaye la surface et suit la topographie de l'échantillon. En mesurant ces forces au cours du balayage, il est possible de reconstituer une image tridimensionnelle du matériau.

La sonde peut se présenter sous différentes géométries et configurations d'association résonateur/pointe.

Une architecture conventionnelle est celle dans laquelle la sonde comprend une poutre de type « encastrée-libre » vibrant sur un mode de vibration en flexion : la poutre est encastrée à une extrémité et pourvue, à l'extrémité opposée, d'une pointe orientée dans la direction du mode de vibration.

La microscopie à force atomique trouve des applications dans de nombreux domaines de la recherche fondamentale et appliquée, mais également dans différents secteurs de l'industrie. Des améliorations de ses performances restent toutefois souhaitables.

Un enjeu majeur auquel sont aujourd'hui confrontés les chercheurs et industriels réside dans la capacité à augmenter la vitesse d'acquisition des images produites par le microscope, pour rendre possibles des observations en temps réel de phénomènes dynamiques. Un facteur limitant réside en effet dans la bande passante de mesure de la sonde.

Pour répondre à un besoin croissant pour des applications exigeant une grande bande passante de mesure, il est souhaitable de pouvoir à la fois :

- augmenter la fréquence de résonance du mode de vibration mécanique de la sonde, typiquement au-delà de 10 MHz, afin de permettre une mesure plus rapide des mesures de forces d'interaction entre la pointe de sonde et la surface du matériau (on parle aussi de résolution temporelle), et

- augmenter la sensibilité des mesures de la sonde, c'est-à-dire de permettre des mesures de variations de forces de plus faibles valeurs (on parle aussi de résolution en force ou résolution de mesure), typiquement au-dessous de 10 $fN/\sqrt{Hz}$.

Les sondes conventionnelles constituées d'une poutre encastrée-libre font appel à une miniaturisation poussée du résonateur mécanique afin d'en augmenter la fréquence propre de résonance du mode de vibration en flexion. Cette approche rend problématique la fabrication de la sonde, et en particulier de la pointe. Par ailleurs, elle rend problématique la détection de l'oscillation de la pointe : dans le cas d'une détection par réflexion d'un faisceau lumineux par exemple, la limite de diffraction optique ne permet pas d'exploiter des poutres encastrée-libre de moins de 2 $\mu$m de large. D'une manière plus générale, la miniaturisation diminue drastiquement les surfaces sur lesquelles opèrent les transductions électromécaniques, mettant à mal leur capacité à détecter l'oscillation mécanique de la pointe avec une bonne sensibilité de mesure, à la fréquence propre de résonance.

Une solution connue pour garantir une sensibilité de mesure élevée consiste à exploiter des modes de vibration mécanique se propageant dans le plan d'un résonateur micromécanique à actionnement électrostatique et détection capacitive, comme celui décrit dans le document de brevet FR 2 915 803. Toutefois, il apparaît que la valeur limite de sensibilité se dégrade lorsque l'on cherche à augmenter la fréquence de résonance du mode mécanique par réduction des dimensions de la sonde. En effet, une taille réduite de la sonde induit une diminution de la capacité de transduction de celle-ci ce qui entraine une perte de sensibilité. Cette démarche n'est donc pas compatible avec une recherche d'optimisation d'intégration.

Une autre solution connue consiste à équiper la sonde d'un résonateur optique en plus d'un résonateur mécanique, comme illustré dans l'article de M. K. Srinivasan intitulé *« Optomechanical transduction of an integrated silicon cantilever probe using a microdisk resonator»* (2011). Selon cette technique, le résonateur mécanique est configuré pour supporter un mode de vibration mécanique de flexion et le résonateur optique est couplé au résonateur mécanique et est utilisé pour détecter les déformations mécaniques du résonateur mécanique.

Toutefois, l'inconvénient de cette technique réside dans le fait que le couplage optomécanique entre le résonateur mécanique et le résonateur optique étant faible, la sensibilité de mesure de la sonde s'en trouve limitée. Cela limite également la possibilité de détecter le mouvement mécanique à des fréquences supérieure à 10MHz, ainsi que la possibilité d'actionnement optique du mouvement haute fréquence. Par ailleurs, l'utilisation d'un mode de vibration mécanique de flexion nécessite, pour atteindre des fréquences de résonance du mode mécanique supérieures à 10 MHz, une réduction des dimensions de la sonde à une échelle peu compatible avec une fabrication industrielle de volume à coût modéré.

Il apparaît donc nécessaire de proposer une sonde pour microscope à force atomique qui présente des performances en termes de fréquence de résonance et de résolution de mesure meilleures à celles des solutions de l'art antérieur.

## 3. EXPOSÉ DE L'INVENTION

L'invention propose une sonde pour microscope à force atomique comprenant un résonateur optomécanique couplé à des moyens optiques configurés pour émettre un faisceau de lumière incident vers ledit résonateur et recevoir un faisceau de lumière émergent depuis ledit résonateur et une pointe de sonde s'étendant selon un axe. Ledit résonateur comprend un corps résonant de structure planaire qui s'étend le long d'un plan et à partir duquel ladite pointe de sonde fait saillie directement dans le plan dudit corps résonant, ledit corps résonant étant apte à résonner à la fois sur un mode de vibration mécanique de volume et sur un mode de vibration optique de volume. Ladite pointe de sonde est disposée en correspondance d'un point de maximum d'amplitude dudit mode de vibration mécanique de volume. Les moyens optiques comprennent un guide d'onde disposé dans le plan dudit corps résonant à une distance prédéterminée dudit corps résonant et sensiblement perpendiculaire à l'axe de la pointe de sonde de telle sorte qu'une déformation mécanique dudit corps résonant selon ledit mode de vibration mécanique de volume induit une modification de l'état de transmission de la lumière dudit mode de vibration optique de volume, venant modifier le faisceau de lumière émergent.

Ainsi, l'invention propose une sonde AFM équipée d'un résonateur optomécanique monobloc intégrant à la fois les fonctions de résonance mécanique et de résonance optique.

Le principe général de l'invention repose sur l'utilisation astucieuse d'un couplage optomécanique entre un mode de vibration optique de volume et un mode de vibration mécanique de volume réalisé au sein d'un même corps résonant pour permettre la détection des vibrations mécaniques au niveau de la pointe à des fréquences élevées et à un niveau de résolution de mesure bien meilleur que dans le cas des dispositifs de l'art antérieur.

On entend par couplage optomécanique l'existence d'une interaction, permise par un recouvrement spatial au moins partie,l entre la déformation mécanique du mode de vibration mécanique de volume et mode propre de vibration optique au sein du corps résonant.

Un mode de vibration mécanique de volume se définit comme un mode de vibration caractérisé par une déformée mécanique du résonateur oscillant à une fréquence propre, pour lequel le champ de contrainte est homogène dans une direction donnée. Un mode de vibration optique de volume se définit comme un mode ondulatoire électromagnétique oscillant à une fréquence propre selon deux composantes.

Selon une mise en oeuvre particulière de l'invention, le mode de vibration mécanique de volume est excité par des moyens d'excitations appartenant au groupe comprenant : des moyens d'excitations piézoélectriques, d'excitations électrostatiques, des moyens d'excitations thermoélastiques, des moyens d'excitations magnétiques.

Ainsi, l'actionnement des oscillations mécaniques peut avantageusement se faire de différentes manières.

Selon une variante de mise en oeuvre particulièrement avantageuse, le mode de vibration mécanique de volume est excité par des moyens d'excitations optiques compris dans lesdits moyens optiques.

Ainsi, dans ce mode de réalisation particulier, l'invention propose avantageusement d'utiliser le couplage optomécanique non seulement pour la détection de vibrations mécaniques, mais également pour l'actionnement de vibrations mécaniques. Par exemple, un mode de vibration mécanique de volume peut être optiquement induit par l'émission d'un faisceau de lumière d'amplitude variable vers ledit résonateur à l'aide des moyens optiques. En utilisant les moyens optiques étant déjà présents pour réaliser la détection de vibrations mécaniques, l'invention offre une solution simple et économique pour réaliser l'actionnement optique des vibrations mécaniques, en évitant l'utilisation de moyens d'excitations dédiés.

Selon une configuration particulière, le mode de vibration mécanique de volume est un mode de vibration planaire.

Cette configuration particulière est bien adaptée aux mesures AFM hautes fréquences. La constante de raideur élastique associée à ce type de mode de vibration mécanique est plus élevée que celle associée à d'autres modes (comme les modes de flexion utilisés dans les sondes de l'art antérieur par exemple). La fréquence de résonance utilisée est donc également plus élevée, généralement comprise entre à 1 MHz et 10 GHz, sans qu'il soit nécessaire de réduire les dimensions du résonateur.

Selon une caractéristique particulière, le corps du résonateur se présente sous une forme appartenant au groupe comprenant les formes : circulaire, elliptique, oblongue, polygonale.

Selon l'invention, la pointe de sonde est disposée en correspondance d'un point de maximum d'amplitude dudit mode de vibration mécanique à la surface dudit corps.

Ce point de maximum d'amplitude, aussi appelé point ventral, correspond à un emplacement optimal pour la pointe car il permet de minimiser les pertes d'énergie mécanique.

Selon un aspect particulier de l'invention, la pointe de sonde est disposée en correspondance d'un point de minimum d'amplitude dudit mode de vibration optique.

De cette façon, la pointe est disposée en un lieu où elle perturbe le moins le mode de vibration optique.

Selon un aspect particulier de l'invention, la sonde comprend des moyens de fixation du corps à une structure de support, lesdits moyens de fixation étant disposés en correspondance d'au moins un point de minimum d'amplitude dudit mode de vibration mécanique à la surface dudit corps.

Un point de minimum d'amplitude, aussi appelé point nodal, correspond à un lieu du résonateur qui est stationnaire pendant l'oscillation mécanique du résonateur. Ce point nodal correspond à un emplacement de choix pour fixer le corps du résonateur à la structure de support, car ils contribuent à limiter les pertes d'énergie mécanique vibratoire. Une telle réalisation permet d'assurer une bonne sensibilité de la sonde lors des mesures.

Selon une première mise oeuvre particulière de l'invention, dite en disque sur pilier central, le corps dudit résonateur est en forme de disque, et lesdits moyens de fixation se présentent sous la forme d'un pilier d'ancrage à la structure de support, relié en un point central dudit corps qui correspond audit au moins un point de minimum d'amplitude dudit mode de vibration mécanique.

Selon une deuxième mise de mise oeuvre particulière, dite en anneau ancré par des poutres en un point central, le corps dudit résonateur est en forme d'anneau, lesdits moyens de fixation se présentent sous la forme de poutres chacune ayant une première extrémité reliée à un pilier d'ancrage à la structure de support lequel est situé en un point central dudit résonateur et une deuxième extrémité reliée audit corps résonant.

Par rapport à une forme en disque, la forme en anneau du résonateur lui confère une raideur (résistance à la déformation élastique) plus faible mais la sélection du mode de vibration optique est plus simple (le nombre de modes optiques induits dans le résonateur étant moins important). Enfin, l'ancrage en un point central du résonateur libère l'espace autour de celui-ci, facilitant ainsi l'intégration de la pointe et du guide d'onde optique au sein de la sonde.

Avantageusement, une poutre parmi les poutres reliées au pilier d'ancrage est fixée audit corps dans l'axe de la pointe de sonde, ladite poutre étant comprise entre le pilier d'ancrage et la pointe. Cette configuration particulière permet d'augmenter la rigidité mécanique du corps du résonateur en forme d'anneau, ce qui permet des mesures AFM hautes fréquences.

Selon une variante de la deuxième mise de mise oeuvre particulière, dite en anneau ancré par des poutres en des points externes, lesdits moyens de fixation se présentent sous la forme de poutres chacune ayant une première extrémité reliée à un pilier d'ancrage distinct lequel est situé sur la structure de support en un point externe dudit résonateur et une deuxième extrémité reliée audit corps résonant.

Selon un autre aspect particulier de l'invention, le mode de vibration mécanique de volume est un mode de vibration de respiration radiale et le mode de vibration optique de volume est un mode de vibration en boucle fermée de type mode de galerie ou mode en anneau.

La mise en oeuvre de ces deux types modes de vibration est avantageuse car elle permet d'obtenir un couplage optomécanique de bonne qualité.

Selon un aspect particulier de l'invention, les moyens optiques comprennent au moins un guide d'onde optique ou au moins une fibre optique.

Une déformation mécanique du corps du résonateur induit un changement de longueur de trajet optique du faisceau de lumière parcourant le corps du résonateur, provoquant un changement de la longueur d'onde de résonance associée au mode de vibration optique. Le changement de longueur d'onde de résonance module l'intensité lumineuse du faisceau lumineux transmis par le guide d'onde (processus de détection). Une modulation du faisceau de lumière émis par le guide d'onde induit une modulation du faisceau de lumière parcourant le corps du résonateur, provoquant une déformation mécanique du corps du résonateur (processus d'actionnement).

Selon un autre aspect particulier de l'invention, le corps résonant et la pointe de sonde sont réalisés de façon monolithique et à partir d'un matériau semi-conducteur ou diélectrique.

Selon une caractéristique particulière, la sonde comprend une liaison électrique entre le corps résonant et la structure de support.

Ainsi, une telle liaison électrique permet de contrôler le potentiel électrique de la pointe. Elle peut être réalisée par l'intermédiaire des moyens de fixation de la sonde.

Selon un aspect particulier de l'invention, le corps résonant présente une épaisseur comprise entre 0,01 et 10 $\mu$m, et la pointe de sonde présente une longueur comprise entre 0,10 et 1 $\mu$m , une largeur de base comprise entre 0,01 et 0,25 $\mu$m, et un apex ayant un rayon de courbure compris entre 0,1 et 100 nm.

Selon un aspect particulier de l'invention, le corps résonant présente un rayon externe compris entre 0,10 et 100 $\mu$m.

Selon un aspect particulier de l'invention, le corps résonant présente un rayon interne compris entre 0,10 et 100 $\mu$m.

Selon un aspect particulier de l'invention, la distance entre le guide d'onde optique et le corps résonant est comprise entre 0,01 et 10 μm.

Dans un autre mode de réalisation de l'invention, il est proposé un microscope à force atomique tel qu'il comprend au moins une sonde tel que décrit précédemment, dans l'un quelconque de ses différents modes de réalisation ou mises en oeuvre particulières.

## 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 représente schématiquement une vue en plan et une vue en coupe d'une sonde selon un premier mode de réalisation particulier de l'invention ;
- les figures 2A et 2B représentent des schémas simplifiés illustrant respectivement un mode de vibration mécanique de respiration du résonateur de la figure 1 (selon une vue en plan et une vue en coupe selon le plan B-B) et un mode de vibration optique de gallérie de ce même résonateur (selon une vue en plan et une vue en coupe selon le plan C-C) ;
- la figure 3 présente un schéma d'un modèle mécanique et optique simplifié représentatif de la sonde illustrée sur la figure 1 ;
- la figure 4 présente une vue schématique d'une sonde selon un deuxième mode de réalisation particulier de l'invention ;
- la figure 5 présente une vue schématique d'une sonde selon une première variante du deuxième mode de réalisation ;
- la figure 6 présente une vue schématique d'une sonde selon une deuxième variante du deuxième mode de réalisation ;
- la figure 7 présente une vue schématique d'une sonde selon un troisième mode de réalisation particulier de l'invention.

## 5. DESCRIPTION DÉTAILLÉE

Sur toutes les figures du présent document, les éléments et étapes identiques sont désignés par une même référence numérique.

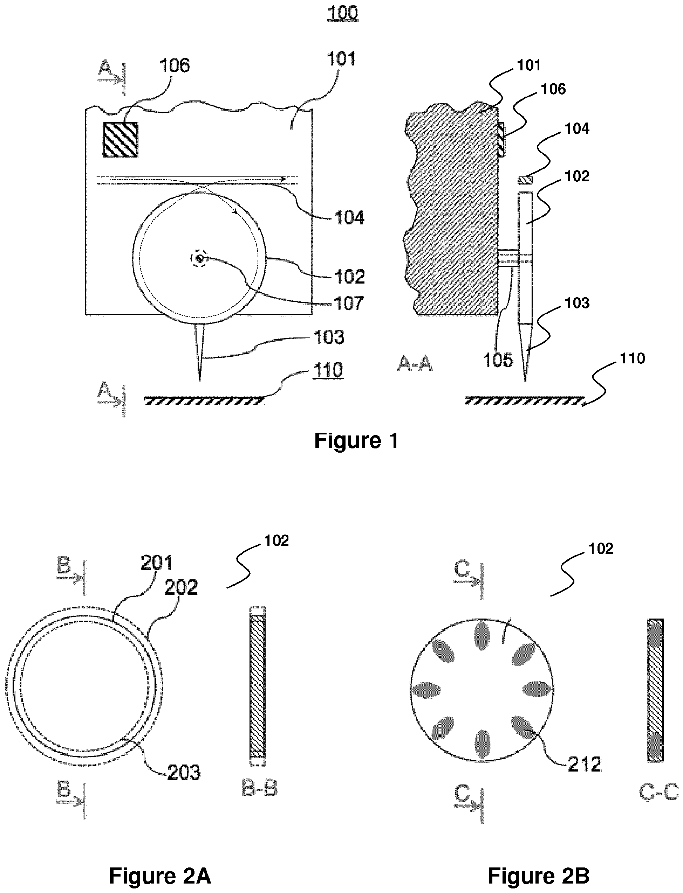

La **figure 1** illustre une vue en plan et une vue en coupe selon le plan A-A d'une sonde 100 pour microscopie à force atomique selon un premier mode de réalisation particulier de l'invention.

La sonde 100 comprend un résonateur optomécanique 102 et une pointe de sonde 103 faisant saillie du résonateur 102. Le résonateur 102 est constitué d'un corps résonant en forme de disque, ayant par exemple un rayon de 10 μm et une épaisseur de 0,5 μm. La pointe 103 s'étend dans le plan du corps du résonateur 102, lequel est fixé à une structure de support 101.

Le corps du résonateur 102 est configuré pour supporter à la fois un mode de vibration mécanique planaire, dit de respiration radiale, et un mode de vibration optique planaire, dit de galerie. Pour ce faire, le corps du résonateur 102 est réalisé à partir d'un matériau élastiquement déformable, de manière à former un oscillateur mécanique supportant le mode de vibration mécanique de respiration, et ayant un indice de réfraction de manière à former une cavité résonante optique supportant le mode de vibration optique de galerie. Le corps du résonateur 102 peut être réalisé dans un matériau semi-conducteur, tel que le silicium monocristallin par exemple, d'indice de réfraction égal à 3,47.

On entend par élastiquement déformable un matériau apte à se déformer sous une contrainte mécanique donnée et à recouvrir sa forme initiale lorsque ladite contrainte mécanique n'est plus appliquée (il s'agit d'une déformation réversible).

Le mode de vibration de respiration radiale est un mode de vibration mécanique de volume particulier et d'autres modes de vibration mécanique de volume sont bien entendu envisageables, comme discuté plus loin dans la description. Ce mode de vibration mécanique particulier est illustré de manière simplifiée à la **figure 2A.** De même, le mode de vibration de galerie est un mode de vibration optique en boucle fermée particulier et d'autres modes de vibration optique de volume sont bien entendu envisageables, comme discuté plus loin dans la description. Ce mode de vibration optique particulier est illustré de manière simplifiée à la **figure 2B.**

La figure 2A montre le corps du résonateur 102 dans son état d'équilibre (représenté par le disque 201 (ligne continue)), dans son état déformé passant par une amplitude maximale de vibration (représenté par le disque en pointillé 202) et passant par une amplitude minimale de vibration (représenté par le disque en pointillé 203) selon le mode mécanique de respiration radiale.

La figure 2B montre les points de maximum d'amplitude 212 du mode optique de galerie supporté par le corps du résonateur 102. Ces points de maximum d'amplitude 212 correspondent à des points de forte concentration du champ électromagnétique localisés sur la périphérie du disque 102. Le mode optique de galerie résulte de la réflexion de faisceaux lumineux sur la paroi cylindrique interne du disque formant cavité optique, laquelle est réalisée dans un matériau dont l'indice de réfraction est plus élevé que le milieu qui l'entoure (à savoir l'air d'indice de réfraction égal à 1). Les faisceaux lumineux restent ainsi principalement confinés le long de la paroi cylindrique, formant un trajet optique sous forme de boucle dans le plan du résonateur 102, ayant une longueur donnée. Le mode optique de galerie représenté sur le schéma est de type transverse électrique et caractérisé par un nombre radial p égal à 1, un nombre azimutal m égal à 8, et par une longueur d'onde de résonance donnée.

Le nombre azimutal m représenté sur cette figure 2B est volontairement limité, à titre de descriptif purement pédagogique, de manière à ne pas surcharger la figure. Un nombre azimutal m différent (comme pour le nombre radial p) peut bien entendu être généré en fonction de la longueur d'onde de résonance désirée et du matériau choisi. De manière générale, la longueur d'onde optique de résonance dépend des nombres m et de p, des dimensions du disque, de la nature du matériau (et plus particulièrement de son indice de réfraction), et du type de propagation des ondes (TE ou TM). Par exemple, une longueur de résonance optique de 1,55 $\mu$m peut être obtenue un corps résonant sous forme de disque de silicium de 10 $\mu$m de rayon et de 500 nm d'épaisseur, et avec les nombres p = 1 et m = 140.

La sonde 100 est en outre doté de moyens optiques comprenant une source laser (non illustrée sur les figures) conçue pour générer un faisceau lumineux incident de longueur d'onde de référence sensiblement proche de la longueur d'onde de résonance du mode optique et un guide d'onde optique 104 dans lequel circule le faisceau incident. Le guide d'onde 104 est couplé optiquement au corps du résonateur 102 de telle sorte qu'une partie du faisceau incident est injectée dans le résonateur 102, puis extrait du résonateur 102 après avoir parcouru la cavité optique. Le faisceau lumineux extrait du résonateur 102 est réinjecté dans le guide d'onde 104 dans lequel circule également le faisceau incident. Le guide d'onde 104 est disposé dans le plan du résonateur à une distance d'environ 200 nm de celui-ci et perpendiculairement à l'axe de la pointe 103. Le guide d'onde 104 et la source laser coopèrent avec un bloc de traitement optique configuré pour détecter les variations d'intensité lumineuse du faisceau lumineux traversant le guide d'onde 104.

On entend par sensiblement proche de la longueur d'onde de résonance du mode optique une longueur d'onde de référence comprise dans le pic de résonance du mode optique choisi. Par exemple, la longueur d'onde de référence $\lambda$ est choisie dans la plage de longueurs d'onde suivante :

$$\lambda_0(1-1/Q) < \lambda < \lambda_0(1+1/Q)$$

avec :

$\lambda_0$, la longueur d'onde de résonance du mode de vibration optique du résonateur, et
Q, le coefficient de qualité de résonance optique du résonateur.

Le couplage du mode de vibration mécanique avec le mode de vibration optique (couplage optomécanique) est assuré par un recouvrement spatial entre la région de déformation mécanique associée au mode de vibration mécanique (figure 2A) et la région de concentration du champ électromagnétique (ou trajet optique) associée au mode de vibration optique (figure 2B). Sur les figures 2A et 2B, ce recouvrement spatial se trouve au niveau de la région périphérique du résonateur 102.

En effet, dans le cas d'un résonateur sous forme de disque exploitant un mode de vibration mécanique de respiration radiale, la région de déformation mécanique est maximale au niveau de la région périphérique du disque et le couplage avec le mode de vibration optique est optimal si celui-ci est localisé au même endroit, ce qui est le cas pour les modes de galerie, en particulier pour le nombre radial p = 1.

Grâce à ce couplage optomécanique, il est ainsi possible de détecter une vibration mécanique du résonateur 102 ou bien d'actionner une vibration mécanique du résonateur 102 par simple modulation de l'intensité lumineuse du faisceau lumineux de référence transmis dans le guide d'onde 104.

On décrit, par la suite, diverses caractéristiques de la sonde objet de la présente. Il est entendu que l'ensemble de ces caractéristiques sont combinables entre elles sans sortir du cadre de l'invention.

Principe de détection optique d'une vibration mécanique du résonateur

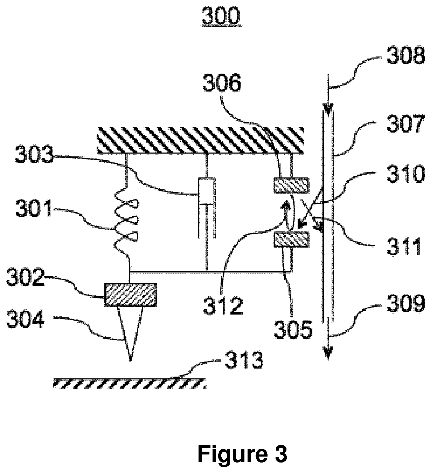

Une déformation mécanique du corps résonant 102 selon le mode de vibration mécanique induit un changement de longueur du trajet optique du faisceau lumineux parcourant la cavité optique du résonateur 102, et donc un décalage de la longueur d'onde de résonance associée au mode de vibration optique (par exemple égale à 1,55 $\mu$m). Ce décalage de la longueur d'onde de résonance module l'intensité lumineuse du faisceau lumineux transmis à la longueur d'onde de référence par le guide d'onde 104 (le principe de détection par modulation de lumière est plus amplement détaillé ci-après en relation avec la figure 3). Ainsi, la détection de vibrations mécaniques du résonateur 102 est obtenue en fonction de la variation d'intensité lumineuse du faisceau lumineux traversant le guide d'onde 104.

Principe d'actionnement optique d'une vibration mécanique du résonateur

Une modification de l'état de transmission de la lumière du mode de vibration optique induit une déformation mécanique du corps résonant 102 selon le mode de vibration mécanique. Les moyens optiques décrits plus haut en relation avec le principe de détection (source laser, guide optique et bloc de traitement optique) sont configurés ici pour réaliser l'actionnement d'une vibration mécanique par excitation optique.

L'actionnement d'une vibration mécanique du résonateur 102 est obtenu en modulant l'intensité du faisceau lumineux de référence circulant dans le guide d'onde 104. Une telle modulation provoque une modulation de l'intensité lumineuse du faisceau lumineux parcourant la cavité optique du résonateur 102, engendrant une modulation des forces optiques agissant sur le résonateur 102. La modulation d'intensité lumineuse étant faite à une fréquence proche de la fréquence de résonance du mode de vibration mécanique (par exemple de l'ordre de 250 MHz), les forces optiques générées sur le résonateur 102 provoquent une déformation mécanique de celui-ci.

On entend par sensiblement proche de la fréquence de résonance du mode de vibration mécanique une fréquence comprise dans le pic de résonance du mode mécanique de volume choisi. Par exemple, la fréquence f est choisie dans la plage de fréquences suivante :

$$f_0(1-1/Q) < f < f_0(1+1/Q)$$

avec :

f_0, la fréquence de résonance du mode de vibration mécanique du résonateur, et

Q, le coefficient de qualité de résonance mécanique du résonateur.

Pour une application AFM en mode de fonctionnement « Modulation de Fréquence » (ou FM-AFM en anglais pour « Force Modulation AFM »), l'intensité lumineuse sera modulée de sorte que la fréquence f soit égale à la fréquence de résonance du mode de vibration mécanique $f_0$. Pour une application AFM en mode de fonctionnement Modulation d'Amplitude (ou AM-AFM en anglais pour « Amplitude Modulation AFM »), l'intensité lumineuse sera modulée de sorte que la fréquence f soit inférieure à la fréquence de résonance du mode de vibration mécanique $f_0$.

Le_principe d'actionnement_de_vibrations mécaniques décrit_ci-dessus repose sur le principe du_couplage optomécanique du résonateur (les vibrations mécaniques du résonateur sont induites optiquement par modulation de lumière parcourant la cavité optique du résonateur). On peut également envisager que l'actionnement des vibrations mécanique soit mis en oeuvre par des moyens classiques d'excitation (non illustrés sur les figures) tels que par exemple des moyens d'excitations piézoélectriques, des moyens d'excitations électrostatiques, des moyens d'excitations thermoélastiques ou des moyens d'excitations magnétiques. Ainsi, seule la détection repose sur un couplage optomécanique du résonateur. L'avantage d'un actionnement optique basé sur un couplage optomécanique du_résonateur est qu'il n'est pas nécessaire d'équiper la sonde de moyens d'excitations dédiés. Une telle sonde est donc plus simple et moins coûteuse à mettre en oeuvre. Ainsi, cette approche particulière consistant à utiliser un couplage optomécanique au sein d'un même corps résonant pour réaliser la détection et l'actionnement de vibrations mécaniques est nouvelle et inventive au vu de l'état de la technique.

Pour assurer un bon couplage optomécanique, il convient de privilégier un bon accord entre les lieux de déformation mécanique associés au mode de vibration mécanique et les lieux de concentration d'énergie optique associés au mode de vibration optique. Cet accord dépend de la forme du résonateur, du matériau utilisé et de la nature des modes de vibration mécanique et optique mis en oeuvre au sein de la structure. Les inventeurs ont remarqué que la mise en oeuvre d'un mode de vibration mécanique de respiration et d'un mode de vibration optique de galerie dans une structure en forme disque et en silicium monocristallin, sur la base des caractéristiques dimensionnelles détaillées ci-dessous, permet d'assurer un couplage optomécanique particulièrement de bonne qualité.

Afin de maximiser la sensibilité de détection, le choix des modes de vibration est opéré de sorte que la déformation mécanique engendre une variation maximale de la longueur d'onde de résonance du mode de vibration optique. Le mode de réalisation particulier décrit ici permet d'obtenir une résolution de mesure de l'amplitude de la vibration mécanique du résonateur meilleure que celle obtenue avec les sondes de l'art antérieur, comprise entre 0,001 et 1,000 fm /√Hz. Pour l'application en microscopie à force atomique, le mode de réalisation particulier décrit ici permet d'obtenir une résolution de mesure en force meilleure que 10 fN/√Hz.

Par ailleurs, la sonde 100 comprend des moyens de fixation du corps du résonateur 102 à une structure de support 101. Ces moyens de fixation se présentent ici sous la forme d'un pilier d'ancrage 105 disposé en correspondance du point de minimum d'amplitude du mode de vibration mécanique, à savoir le centre du disque. La réalisation d'un pilier d'ancrage en un point de minimum d'amplitude de vibration mécanique du résonateur 102 contribue à limiter la dissipation d'énergie mécanique vibratoire par rayonnement acoustique dans la structure de support 101.

Selon une mise en oeuvre particulière, le corps du résonateur optomécanique 102 et la pointe de sonde 103 sont réalisés de manière monolithique dans un matériau semi-conducteur, tel que le silicium monocristallin par exemple. La pointe 103 s'étend dans le plan du résonateur 102 à partir de la paroi cylindrique externe du résonateur 102. Les points périphériques du résonateur 102 correspondant à des points de maximums de déplacement radial du mode de vibration mécanique de respiration, la pointe 103 est donc disposée en correspondance de ces maximums de déplacement radial. Lorsque la vibration du mode de respiration du résonateur 102 est actionnée, la pointe 103 subit donc un mouvement d'oscillation en direction de la surface 110 à analyser. La pointe 103 est en outre polarisée au potentiel du support 101 par l'intermédiaire d'une liaison électrique 107 qui parcourt le piler d'ancrage 105. La prise de contact électrique s'effectue grâce à un plot métallique 106 connecté à la structure de support 101. La liaison électrique 107 permet de contrôler le potentiel électrique de la pointe 103.

Le corps du résonateur 102 présente typiquement une épaisseur de 0,5 µm, un rayon de 10 µm, un coefficient de qualité mécanique compris entre $10^2$ et $10^4$ et un coefficient de qualité optique compris entre $10^4$

et 10[5]. La distance séparant le guide d'onde 104 et du résonateur 102 est typiquement de l'ordre de 200 nm.

Bien entendu il s'agit là d'exemples de dimensions purement illustratifs et d'autres dimensions peuvent bien sûr être envisagées sans sortir du cadre de l'invention. En particulier, le corps résonant peut avoir une épaisseur comprise entre 0,01 et 10 $\mu$m, un rayon compris entre 0,10 et 100 $\mu$m. La pointe de sonde peut avoir une longueur comprise entre 0,10 et 10 $\mu$m, une largeur de base comprise entre 0,01 et 2,5 $\mu$m, et un apex ayant un rayon de courbure compris entre 0,1 et 100 nm. La distance séparant le guide d'onde 104 et le corps résonant 102 peut être comprise entre 0,01 et 10 $\mu$m.

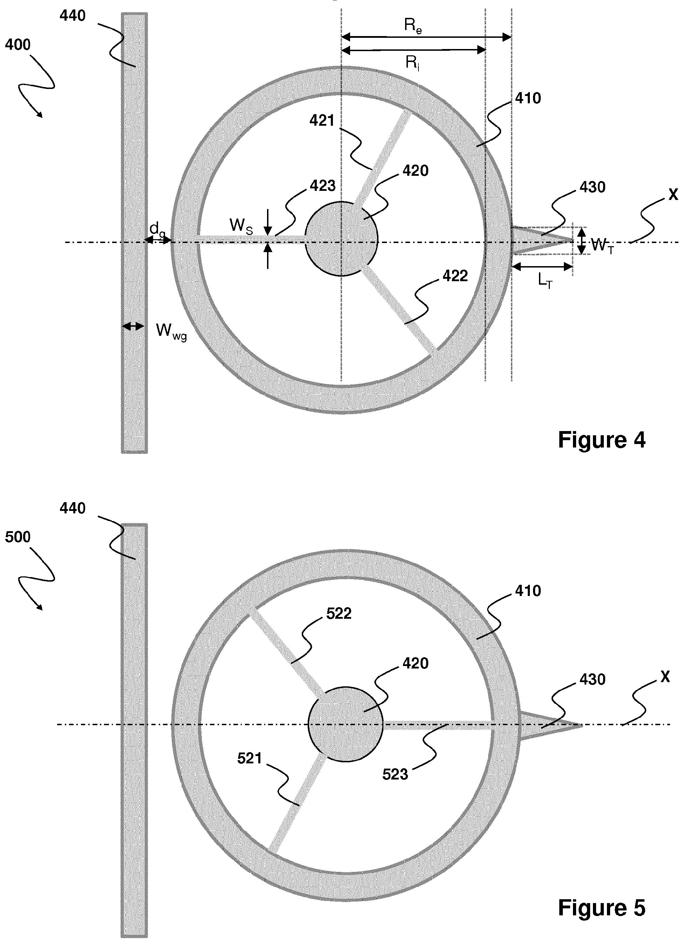

Bien que les figures 1, 2A et 2B, montre un résonateur ayant un corps en forme de disque, le corps peut avoir toute autre forme propre à supporter, en combinaison avec la nature du matériau choisi, à la fois un mode de vibration mécanique de volume et un mode de vibration optique en boucle fermée. Par exemple, le corps peut avoir une forme annulaire, comme illustré ci-dessous en relation avec les figures 4, 5, 6, 7 et 8. De même, bien que le résonateur décrit jusqu'ici est réalisé à partir de silicium monocristallin, le résonateur peut être réalisé dans tout autre matériau qui, en combinaison avec la forme géométrique choisie, permet de conférer au résonateur sa fonction double de résonateur mécanique et de résonateur optique. Par exemple, le corps peut être fait dans un matériau semi-conducteur tel que l'arséniure de galium (GaAs,) ou dans un matériau diélectrique tel que le nitrure de silicium ($Si_xN_y$), le dioxyde de silicium (SiO2), le niobate de lithium ($LiNbO_3$). L'homme du métier choisira la nature du matériau en fonction de ses caractéristiques mécanique (son module d'élasticité ou module d'Young) et donc de la fréquence de résonance du mode de vibration mécanique désirée.

On présente maintenant, en relation avec la **figure 3**, un modèle schématique simplifié représentatif du fonctionnement mécanique et optique de la sonde 100 illustrée à la figure 1.

Le résonateur 300 est représenté, pour sa partie mécanique et pour un mode de vibration mécanique donné, par un système mécanique résonant constitué par un ressort 301 de constante de raideur équivalente K, une masse équivalente 302 de masse M, et un élément dissipatif 303 de coefficient d'amortissement $\alpha$. La pointe 304 représentant la pointe de sonde 103 est attachée à la masse 302. Les éléments 301, 302 et 303 sont déterminés de sorte que :

- la fréquence propre de résonance mécanique f du modèle soit égale à la fréquence propre du mode de vibration mécanique de la sonde 100 ;
- le coefficient de qualité de la résonance mécanique du modèle soit égal au coefficient de qualité du mode de vibration mécanique de la sonde 100 ;
- l'amplitude d'oscillation mécanique de la pointe du modèle est la même pour celle de la sonde 100 ;

- la quantité d'énergie cinétique maximale contenue dans le résonateur mécanique de la sonde est la même que celle contenue dans le modèle pour une même amplitude d'oscillation de la pointe.

On définit les grandeurs suivantes :

$f = \frac{1}{2\pi}\sqrt{\frac{K}{M}}$ , la fréquence propre de résonance mécanique ;

$Q = \frac{2\pi f m}{\alpha}$ , le coefficient de qualité de la résonance mécanique ;

$\tau = \frac{Q}{f}$ , la durée de relaxation du résonateur mécanique ;

$BW = \frac{1}{\tau}$ , la bande passante du résonateur mécanique.

Afin d'augmenter la bande passante de mesure BW (c'est à dire mesurer plus rapidement les forces d'interaction entre la pointe vibrante 304 et la surface du matériau analysé 313), il est nécessaire d'augmenter la fréquence propre f du mode de vibration mécanique du résonateur. Les lois d'échelle montrent que la miniaturisation du résonateur mécanique permet d'augmenter la fréquence propre de celui-ci. La fréquence dépend également du type et de l'ordre du mode mécanique de vibration qui est considéré.

La présente invention fait appel à un résonateur mécanique qui exploite un mode de vibration mécanique de plus haute fréquence que le mode de vibration de flexion utilisé dans les sondes conventionnelles de type poutre encastrée-libre. C'est par exemple le cas du mode de vibration mécanique de respiration du disque de la sonde 100 de la figure 1. La fréquence propre de résonance est de l'ordre de 250 MHz pour un disque en silicium de 10 $\mu$m de rayon, ce qui permet de relâcher les contraintes de fabrication liées à la miniaturisation. Une telle structure de résonateur mécanique est par ailleurs caractérisée par une raideur K du mode mécanique plus élevée, typiquement de 10 à 10 000 fois supérieure.

Comme discuté ci-dessus, la présente invention propose, selon une mise en oeuvre particulière, d'implémenter une détection optique résonante au sein même du résonateur mécanique de la sonde. Le résonateur 300 est représenté, pour sa partie optique, par une cavité optique résonante formée par un miroir fixe 306 et un miroir mobile 305 solidaire du mouvement de la pointe 304. Cette cavité optique est le lieu d'au moins une résonance optique pour au moins une longueur d'onde de résonance qui dépend de la géométrie de la cavité optique. A la résonance optique, la lumière à l'intérieur de la cavité fait un nombre d'aller-retour 312. La cavité optique est caractérisée par un coefficient de qualité compris entre 10[2] et 10[7]. Le résonateur 300 est représenté, pour sa partie mécanique, par un système masse-ressort amorti (301, 302, 303), dont la masse mobile vibrante est solidaire du mouvement du miroir mobile 305 et de la pointe 304. Ainsi, la vibration du résonateur mécanique entraîne le mouvement de la pointe AFM, et aussi le mouvement du miroir mobile 305, provoquant la variation de la longueur de la cavité optique, ce qui fait varier la longueur d'onde de résonance optique. Un guide d'onde 307 est couplé à la cavité optique. Une partie d'un faisceau lumineux incident 308 de longueur d'onde donnée est injectée 310 dans la cavité optique et parcours la cavité optique. Une partie du faisceau lumineux issu de la cavité optique est injecté 311 dans le guide d'onde 307, et se superpose au faisceau lumineux incident 308 de façon à former un faisceau lumineux de sortie modulé 309. L'intensité lumineuse du faisceau 309 sortant du guide d'onde varie en fonction de la différence entre la longueur d'onde de résonance de la cavité optique et la longueur d'onde donnée du faisceau de lumière incident 308. Ainsi, l'intensité lumineuse du faisceau sortant du guide d'onde 307 est fonction de l'amplitude de la vibration mécanique du résonateur 300 et permet la mesure de celle-ci. Plus le coefficient de qualité de la cavité optique est grand et meilleure est la sensibilité de détection des vibrations mécaniques. Les mécanismes qui conduisent au décalage de la longueur d'onde de résonance lors de la vibration mécanique relèvent de l'état déformé du corps du résonateur et de la variation locale de l'indice de réfraction du matériau constituant le résonateur, sous l'effet de la déformation mécanique liée à la vibration.

Selon une mise en oeuvre particulière, la présente invention propose d'implémenter un actionnement optique résonant au sein même du résonateur mécanique de la sonde. La lumière à l'intérieur de la cavité optique applique une force électromagnétique sur les miroirs 305 et 306. Cette force électromagnétique étant proportionnelle à l'intensité lumineuse circulant dans la cavité optique, elle agit donc sur la partie mécanique du résonateur formé des éléments 301, 302 et 303. En modulant l'intensité lumineuse du faisceau incident 308, il est possible de moduler la force électromagnétique appliquée sur la partie mécanique du résonateur afin d'induire une déformation mécanique de celui-ci. Si la modulation de la force électromagnétique appliquée se fait à une fréquence proche de la fréquence propre du mode de vibration mécanique du résonateur, alors elle contribue à l'actionnement de l'oscillation de la pointe 304. Les mécanismes qui contribuent à la force électromagnétique sont de type pression de radiation, pression d'électrostriction et/ou contraintes photothermiques.

La **figure 4** illustre la structure simplifiée d'une sonde 400 selon un deuxième mode de réalisation particulier de l'invention.

Dans ce mode de réalisation, au lieu d'un corps en forme de disque, le résonateur optomécanique 410 comprend un corps en forme d'anneau circulaire. Les moyens de fixation du corps à la structure de support (non illustrée sur la figure) se présentent ici sous la forme de trois poutres 421, 422, 423 reliées à un pilier d'ancrage central 420. Ce dernier est situé au centre du résonateur 410 qui correspond au point de minimum d'amplitude du mode de vibration mécanique du résonateur 410. Les trois poutres 421, 422, 423 sont régulièrement réparties angulairement dans le plan du résonateur 410 autour du pilier central 420 avec un angle de 120 degrés entre deux poutres successives. Dans ce mode de réalisation, la sonde 400 est donc basée sur une structure en anneau circulaire à trois rayons.

La sonde 400 comprend en outre une pointe de sonde 430 faisant saillie du résonateur 410. La pointe 430 s'étend dans le plan du résonateur 410.

Selon une mise en oeuvre particulière, le résonateur 410, la pointe 430, les poutres 421, 422, 423 et le pilier d'ancrage 420 sont réalisées de manière monolithique à partir d'un matériau semi-conducteur, tel que le silicium monocristallin par exemple.

Comme pour le premier mode de réalisation, la forme géométrique et le matériau du résonateur 410 sont choisis de façon à rendre le résonateur 410 à la fois mécaniquement résonant selon le mode de vibration de respiration radiale et optiquement résonant selon le mode de vibration de galerie. Le mode optique de galerie résulte de la réflexion de faisceaux lumineux sur les parois internes du résonateur 410 en forme d'anneau et d'indice de réfraction égal à 3,47. Le mode mécanique de respiration radiale résulte de la déformation élastique du résonateur 410 soumis à une vibration mécanique. Par rapport à la forme en disque, cette forme particulière en anneau confère au résonateur une raideur plus faible mais permet une sélection du mode de vibration optique plus aisée (le nombre de modes optiques induits dans le résonateur y étant moins important). Par ailleurs, l'ancrage en un point central du résonateur libère l'espace autour de celui-ci, facilitant ainsi l'intégration de la pointe et du guide d'onde optique au sein de la sonde.

Le corps du résonateur 410 présente une épaisseur de 0,5 $\mu$m (mais peut être comprise plus généralement entre 0,01 et 10 $\mu$m), un rayon externe $R_e$ de 10 $\mu$m (mais peut être compris plus généralement entre 0,10 et 100 $\mu$m), et un rayon interne $R_i$ de 9,5 $\mu$m (mais peut être compris plus généralement entre 0,10 et 100 $\mu$m). La pointe de sonde présente une longueur $L_T$ de 0,5 $\mu$m (mais peut être comprise plus généralement entre 0,10 et 10 $\mu$m), une largeur de base $W_T$ de 0,1 $\mu$m (mais peut être comprise plus généralement entre 0,01 et 2,5 $\mu$m), et un apex de rayon de courbure compris entre 0,1 et 100 nm. Les poutres présentent une largeur $W_S$ de 0,1 $\mu$m (mais peuvent être comprises plus généralement entre 0,01 et 1 $\mu$m).

La sonde 400 comprend également un guide d'onde 440 couplé optiquement au résonateur 410 conformément au principe décrit ci-dessus en relation avec les figures 1, 2A, 2B et 3. La distance $d_g$ séparant le guide d'onde 440 et le corps résonant 410 peut être comprise entre 0,01 et 10 $\mu$m, par exemple 0,2 $\mu$m. La largeur du guide d'onde $W_{wg}$ est de 0,2 $\mu$m mais peut être comprise plus généralement entre 0,01 et 10 $\mu$m.

Dans une variante de réalisation de la figure 4, les poutres de fixation peuvent être au nombre de 5 et présenter un certain angle par rapport à la pointe. Le nombre de poutres de fixation et leur angle par rapport à la pointe permet de faire varier la rigidité globale du dispositif, et donc sa fréquence.

La **figure 5** présente une première variante du deuxième mode de réalisation conforme à l'invention.

Selon le mode de réalisation de la figure 4, la poutre 423, dite poutre axiale, est disposée dans l'axe X de la pointe 430 entre le pilier central 420 et le guide d'onde 440, c'est-à-dire côté opposé au côté pointe 430. Les poutres 421 et 422 sont régulièrement réparties angulairement de part et d'autre de l'axe X de la pointe 430.

Dans cette variante de réalisation, bien que la sonde 500 soit basée sur une structure en anneau circulaire à trois rayons, les trois poutres de fixation 521, 522, 523 sont disposées selon un agencement différent. Au lieu de disposer la poutre axiale côté opposé au côté pointe 430, la poutre axiale 523 ici est disposée côté pointe (c'est-à-dire entre le pilier central 420 et la pointe 430). Cet agencement particulier permet d'augmenter la rigidité mécanique du corps du résonateur en forme d'anneau, ce qui privilégie des mesures AFM hautes fréquences.

Cette première variante du deuxième mode de réalisation conforme à l'invention peut également se présenter sous forme d'une structure en anneau circulaire à cinq rayons dont l'une des cinq poutres de fixation est disposée côté pointe.

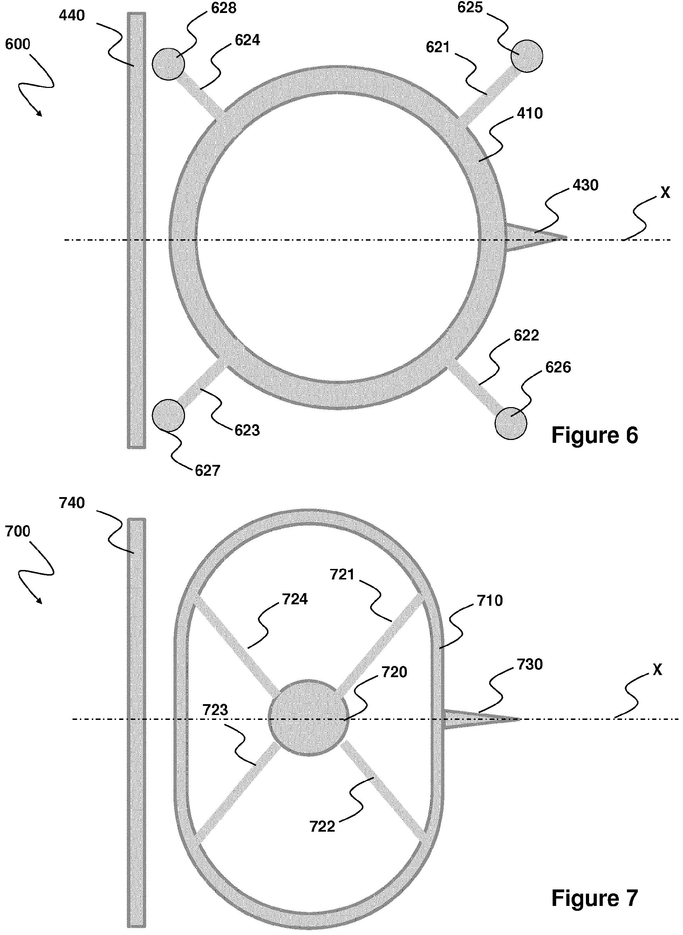

La **figure 6** présente une deuxième variante du deuxième mode de réalisation conforme à l'invention.

Dans cette variante de réalisation, au lieu d'ancrer le corps du résonateur par des poutres en un point central du résonateur, le résonateur est ancré par des poutres reliées à des points externes au résonateur.

Les moyens de fixation de la sonde 600 se présentent ainsi sous la forme de quatre poutres 621, 622, 623, 624 qui ont chacune une première extrémité reliée à un pilier d'ancrage situé en un point externe du résonateur 410 (référencé respectivement 625, 626, 627, 628 sur la figure) et une seconde extrémité reliée au corps du résonateur 410. Dans cette variante de réalisation, la sonde 600 est donc basée sur une structure en anneau circulaire à quatre rayons extérieurs.

La **figure 7** illustre la structure simplifiée d'une sonde 700 selon un troisième mode de réalisation particulier de l'invention.

Dans ce mode de réalisation, au lieu d'un corps en forme de disque, le résonateur optomécanique 710 comprend un corps en forme d'anneau oblong. Les moyens de fixation du corps à la structure de support (non illustrée sur la figure) se présentent ici sous la forme de quatre poutres 721, 722, 723, 724 reliées à un pilier d'ancrage central 720. Ce dernier est situé au centre du résonateur 710 qui correspond au point de minimum d'amplitude du mode de vibration mécanique du résonateur 710. Les quatre poutres 721, 722, 723, 724 sont régulièrement réparties angulairement dans le plan du résonateur 710 autour du pilier d'ancrage 720 avec un angle de 90 degrés entre deux poutres successives.

La sonde 700 est donc basée sur une structure en anneau oblong à quatre rayons.

La sonde 700 comprend en outre une pointe de sonde 730 faisant saillie du résonateur 710 dans le plan du résonateur 710. La sonde 700 comprend également un guide d'onde 740 couplé optiquement au résonateur 710 conformément au principe décrit ci-dessus en relation avec les figures 1, 2A, 2B et 3.

Selon une mise en oeuvre particulière, le résonateur 710, la pointe 730, les poutres 721, 722, 723, 724 et le pilier d'ancrage 720 sont réalisées de manière monolithique à partir d'un matériau semi-conducteur, tel que le silicium monocristallin par exemple.

Le résonateur 710 comprend un corps résonant configuré pour supporter à la fois le mode de vibration de respiration radiale et le mode de vibration de galerie, selon le principe décrit ci-dessus en relation avec les figures 1, 2A, 2B et 3.

A noter que le nombre de poutres ou rayons illustrés dans chacun des modes de réalisation particulier décrits ci-dessus, n'est bien sûr pas limité à trois ou quatre, et peut être plus ou moins important en fonction de la forme du résonateur et des caractéristiques mécaniques que l'on souhaite conférer à la sonde.

Enfin, les sondes pour microscope à force atomique décrites ci-dessus dans les différents modes de réalisation comprennent un résonateur optomécanique monobloc en forme de disque circulaire ou d'anneau circulaire ou oblong. Il est clair toutefois que d'autres formes peuvent être envisagées, comme par exemple un corps résonant de forme ovale, rectangulaire ou elliptique. Egalement, d'autres modes de vibration mécanique et/ou optique peuvent être envisagées sans sortir du cadre de l'invention, comme par exemple les modes mécaniques de type « *wine glass* » pour les résonateurs en forme de disque ou les modes mécaniques de « *Lamé* » pour les résonateurs en forme de plaque.

**Revendications**

1. Sonde (100) pour microscope à force atomique comprenant :

   - un résonateur optomécanique (102) couplé à des moyens optiques configurés pour émettre un faisceau de lumière incident vers ledit résonateur et recevoir un faisceau de lumière émergent depuis ledit résonateur et
   - une pointe de sonde (103) s'étendant selon un axe, ledit résonateur comprenant un corps résonant de structure planaire qui s'étend le long d'un plan et à partir duquel ladite pointe de sonde fait saillie directement dans le plan dudit corps résonant, ledit corps résonant étant apte à résonner à la fois sur un mode de vibration mécanique de volume et sur un mode de vibration optique de volume, ladite pointe de sonde étant disposée en correspondance d'un point de maximum d'amplitude dudit mode de vibration mécanique de volume, et les moyens optiques comprenant un guide d'onde (104) disposé dans le plan dudit corps résonant à une distance prédéterminée dudit corps résonant et sensiblement perpendiculaire à l'axe de la pointe de sonde de telle sorte qu'une déformation mécanique dudit corps résonant selon ledit mode de vibration mécanique de volume induit une modification de l'état de transmission de la lumière dudit mode de vibration optique de volume, venant modifier le faisceau de lumière émergent.

2. Sonde selon la revendication 1, **caractérisé en ce que** le mode de vibration mécanique de volume est excité par des moyens d'excitations appartenant au groupe comprenant : des moyens d'excitations piézoélectriques, d'excitations électrostatiques, des moyens d'excitations thermoélastiques, des moyens d'excitations magnétiques.

3. Sonde selon la revendication 1, **caractérisé en ce que** le mode de vibration mécanique de volume est excité par des moyens d'excitations optiques.

4. Sonde selon la revendication 3, **caractérisé en ce que** le mode de vibration mécanique de volume est un mode de vibration planaire.

5. Sonde selon l'une quelconque des revendications 1 à 4, **caractérisé en ce que** le corps du résonateur (102) se présente sous une forme appartenant au groupe comprenant les formes : circulaire, elliptique, oblongue, polygonale.

6. Sonde selon l'une quelconque des revendications 1 à 5, **caractérisé en ce que** la pointe de sonde (103) est disposée en correspondance d'un point de minimum d'amplitude dudit mode de vibration optique de volume.

7. Sonde selon l'une quelconque des revendications 1 à 6, **caractérisé en ce qu'**elle comprend des moyens de fixation du corps à une structure de support (101), lesdits moyens de fixation étant disposés en correspondance d'au moins un point de minimum d'amplitude dudit mode de vibration mécanique de volume à la surface dudit corps.

8. Sonde selon la revendication 7, **caractérisé en ce que** le corps dudit résonateur (102) est en forme de disque, et **en ce que** lesdits moyens de fixation se présentent sous la forme d'un pilier d'ancrage (105) à la structure de support (101), relié en un point central dudit corps qui correspond audit au moins un point de minimum d'amplitude dudit mode de vibration mécanique de volume.

9. Sonde selon la revendication 7, **caractérisé en ce que** le corps dudit résonateur (102) est en forme d'anneau, et **en ce que** lesdits moyens de fixation se présentent sous la forme de poutres (421, 422, 423 ; 521, 522, 523) chacune ayant une première extrémité reliée à un pilier d'ancrage (420) à la structure de support (101) lequel est situé en un point central dudit résonateur (102) et une deuxième extrémité reliée audit corps résonant.

10. Sonde selon la revendication 9, **caractérisé en ce qu'**une poutre (522) parmi les poutres (521, 522, 523) reliées au pilier d'ancrage (105) est fixée audit corps dans l'axe de la pointe (103) de sonde, ladite poutre étant comprise entre le pilier d'ancrage et la pointe.

11. Sonde selon la revendication 7, **caractérisé en ce que** lesdits moyens de fixation se présentent sous la forme de poutres (621, 622, 623, 624) chacune ayant une première extrémité reliée à un pilier d'ancrage distinct (625, 626, 627, 628) lequel est situé sur la structure de support en un point externe dudit résonateur (102) et une deuxième extrémité reliée audit corps résonant.

12. Sonde selon l'une quelconque des revendications 1 à 11, **caractérisé en ce que** le mode de vibration mécanique de volume est un mode de vibration de respiration radiale et le mode de vibration optique de volume est un mode de vibration en boucle fermée de type mode de galerie ou mode d'anneau.

13. Microscope à force atomique **caractérisé en ce qu'**il comprend au moins une sonde (100) selon l'une quelconque des revendications 1 à 12.

**Patentansprüche**

1. Sonde (100) für ein Rasterkraftmikroskop, umfassend:

    - einen optomechanischen Resonator (102), der mit optischen Mitteln gekoppelt ist, die dazu ausgelegt sind, einen einfallenden Lichtstrahl in Richtung des Resonators auszusenden und einen aus dem Resonator austretenden Lichtstrahl zu empfangen, und
    - eine Sondenspitze (103), die sich entlang einer Achse erstreckt,

    wobei der Resonator einen Resonanzkörper mit planarer Struktur umfasst, der sich entlang einer Ebene erstreckt und von dem die Sondenspitze direkt in der Ebene des Resonanzkörpers vorsteht, wobei der Resonanzkörper in der Lage ist, sowohl in einer mechanischen Volumenschwingungsmode als auch in einer optischen Volumenschwingungsmode zu schwingen, wobei die Sondenspitze in Übereinstimmung mit einem Punkt maximaler Amplitude der mechanischen Volumenschwingungsmode angeordnet ist und wobei die optischen Mittel einen Wellenleiter (104) umfassen, der in der Ebene des Resonanzkörpers in einem vorbestimmten Abstand von dem Resonanzkörper und im Wesentlichen senkrecht zur Achse der Sondenspitze angeordnet ist, derart, dass eine mechanische Verformung des Resonanzkörpers entsprechend der mechanischen Volumenschwingungsmode eine Änderung des Übertragungszustandes des Lichts der optischen Volumenschwingungsmode bewirkt, wodurch der austretende Lichtstrahl verändert wird.

2. Sonde nach Anspruch 1, **dadurch gekennzeichnet, dass** die mechanische Volumenschwingungsmode durch Anregungsmittel angeregt wird, die zu der Gruppe gehören, welche umfasst: Mittel für piezoelektrische Anregungen, für elektrostatische Anregungen, Mittel für thermoelastische Anregungen, Mittel für magnetische Anregungen.

3. Sonde nach Anspruch 1, **dadurch gekennzeichnet, dass** die mechanische Volumenschwingungsmode durch Mittel für optische Anregungen angeregt wird.

4. Sonde nach Anspruch 3, **dadurch gekennzeichnet, dass** die mechanische Volumenschwingungsmode eine planare Schwingungsmode ist.

5. Sonde nach einem der Ansprüche 1 bis 4, **dadurch gekennzeichnet, dass** der Körper des Resonators (102) in einer Form vorliegt, die zu der Gruppe gehört, welche die Formen umfasst: kreisförmig, elliptisch, länglich, polygonal.

6. Sonde nach einem der Ansprüche 1 bis 5, **dadurch gekennzeichnet, dass** die Sondenspitze (103) in Übereinstimmung mit einem Punkt minimaler Amplitude der optischen Volumenschwingungsmode angeordnet ist.

7. Sonde nach einem der Ansprüche 1 bis 6, **dadurch gekennzeichnet, dass** sie Mittel zur Befestigung des Körpers an einer Tragstruktur (101) umfasst, wobei die Befestigungsmittel in Übereinstimmung mit wenigstens einem Punkt minimaler Amplitude der mechanischen Volumenschwingungsmode an der Oberfläche des Körpers angeordnet sind.

8. Sonde nach Anspruch 7, **dadurch gekennzeichnet, dass** der Körper des Resonators (102) scheibenförmig ist und dass die Befestigungsmittel in Form eines Verankerungspfeilers (105) an der Tragstruktur (101) vorliegen, der an einem zentralen Punkt des Körpers verbunden ist, welcher dem wenigstens einen Punkt minimaler Amplitude der mechanischen Volumenschwingungsmode entspricht.

9. Sonde nach Anspruch 7, **dadurch gekennzeichnet, dass** der Körper des Resonators (102) ringförmig ist und dass die Befestigungsmittel in Form von Trägern (421, 422, 423; 521, 522, 523) vorliegen, die jeweils ein erstes Ende aufweisen, das mit einem Verankerungspfeiler (420) an der Tragstruktur (101) verbunden ist, der sich an einem zentralen Punkt des Resonators (102) befindet, sowie ein zweites Ende, das mit dem Resonanzkörper verbunden ist.

10. Sonde nach Anspruch 9, **dadurch gekennzeichnet, dass** ein Träger (522) unter den Trägern (521, 522, 523), die mit dem Verankerungspfeiler (105) verbunden sind, in der Achse der Sondenspitze (103) an dem Körper befestigt ist, wobei der Träger sich zwischen dem Verankerungspfeiler und der Spitze befindet.

11. Sonde nach Anspruch 7, **dadurch gekennzeichnet, dass** die Befestigungsmittel in Form von Trägern (621, 622, 623, 624) vorliegen, die jeweils ein erstes Ende aufweisen, das mit einem separaten Verankerungspfeiler (625, 626, 627, 628) verbunden ist, der an der Tragstruktur an einem äußeren Punkt des Resonators (102) gelegen ist, sowie ein zweites Ende, das mit dem Resonanzkörper verbunden ist.

12. Sonde nach einem der Ansprüche 1 bis 11, **dadurch gekennzeichnet, dass** die mechanische Volumenschwingungsmode eine Radialatmungsschwingungsmode ist und die optische Volumenschwingungsmode eine geschlossener Schwingungsmode vom Typ Galeriemode oder Ringmode ist.

13. Rasterkraftmikroskop, **dadurch gekennzeichnet, dass** es wenigstens eine Sonde (100) nach einem der Ansprüche 1 bis 12 umfasst.

## Claims

1. A probe (100) for atomic force microscope comprising:

   - an optomechanical resonator (102) coupled to optical means configured to emit an incident light-beam towards said resonator and to receive an emerging light-beam from said resonator and
   - a probe tip (103) extending along an axis, said resonator comprising a resonant body of planar structure which extends along a plane and from which said probe tip protrudes directly into the plane of said resonant body, said resonant body being adapted to resonate both on a volume mechanical vibration mode and on a volume optical vibration mode, said probe tip being disposed in correspondence of a point of maximum amplitude of said volume mechanical vibration mode, the optical means comprising a waveguide (104) disposed in the plane of said resonant body at a predetermined distance from said resonant body and substantially perpendicular to the axis of the probe tip such that a mechanical deformation of said resonant body according to said volume mechanical vibration mode induces a modification of the state of light transmission of said volume optical vibration mode, modifying the emerging light-beam.

2. The probe according to claim 1, **characterised in that** the volume mechanical vibration mode is excited by excitation means belonging to the group comprising: piezoelectric excitation, electrostatic excitation means, thermoelastic excitation means, magnetic excitation means.

3. The probe according to claim 1, **characterised in that** the volume mechanical vibration mode is excited by means of optical excitations.

4. The probe according to claim 3, **characterised in that** the volume mechanical vibration mode is a planar vibration mode.

5. The probe according to any one of claims 1 to 4, **characterised in that** the body of the resonator (102) is in a shape belonging to the group comprising the shapes: circular, elliptical, oblong, polygonal.

6. The probe according to any one of claims 1 to 5, **characterised in that** the probe tip (103) is disposed in correspondence of a point of minimum amplitude of said volume optical vibration mode.

7. The probe according to any one of claims 1 to 6, **characterised in that** it comprises means for fastening the body to a support structure (101), said fastening means being disposed in correspondence of at least one point of minimum amplitude of said volume mechanical vibration mode at the surface of said body.

8. The probe according to claim 7, **characterised in that** the body of said resonator (102) is disc-shaped, and **in that** said fastening means are in the form of an anchor post (105) at the support structure (101), connected at a central point of said body which corresponds to said at least one point of minimum amplitude of said volume mechanical vibration mode.

9. The probe according to claim 7, **characterised in that** the body of said resonator (102) is ring-shaped, and **in that** said fastening means are in the form of beams (421, 422, 423; 521, 522, 523) each having a first end connected to an anchor post (420) at the support structure (101) which is located at a central point of said resonator (102) and a second end connected to said resonant body.

10. The probe according to claim 9, **characterised in that** a beam (522) among the beams (521, 522, 523) connected to the anchor post (105) is fastened to said body in the axis of the probe tip (103), said beam being comprised between the anchor post and the tip.

11. The probe according to claim 7, **characterised in that** said fastening means are in the form of beams (621, 622, 623, 624) each having a first end connected to a separate anchor post (625, 626, 627, 628) which is located on the support structure at an external point of said resonator (102) and a second end connected to said resonant body.

12. The probe according to any one of claims 1 to 11, **characterised in that** the volume mechanical vibration mode is a radial breathing vibration mode and the volume optical vibration mode is a closed-loop vibration mode of whispering-gallery mode or ring mode type.

13. An atomic force microscope **characterised in that** it comprises at least one probe (100) according to any one of claims 1 to 12.

Figure 1

Figure 2A

Figure 2B

**Figure 3**

**Figure 4**

**Figure 5**

Figure 6

Figure 7

**RÉFÉRENCES CITÉES DANS LA DESCRIPTION**

**Documents brevets cités dans la description**

- FR 2915803